# EUROPEAN PATENT APPLICATION

(11) **EP 2 375 343 A1**
(43) Date of publication of application: **12.10.2011**
(21) Application number: 10166415.9
(22) Date of filing: 17.06.2010
(51) Int. Cl.: G06F 17/30

(54) **A method and system for searching and presenting information in an address book**

(30) Priority: 08.04.2010 US 756609
(71) Applicant: Research In Motion Limited, Waterloo, ON N2L 3W8 (CA)
(72) Inventor: Marks, Bradley Michael, Mississauga Ontario L4W 0B5 (CA); Martin-Cocher, Gaelle Christine, Mississauga Ontario L4W 5P1 (CA); Sasaki, Curtis Jyun, Redwood City, CA 94065-1183 (US); Garg, Neeraj, Waterloo Ontario N2L 5Z5 (CA)
(74) Representative: Patel, Binesh

(57) **Abstract**

Addresses are searched in an address book on a communication device in response to various context information. A category is defined from a keyword. A context is determined. The address book is searched using the keywords and/or category and or/context to locate matching contacts. Matching contacts may be presented in a user interface, e.g., in accordance with presentation rules responsive to the context. The method may further look-up (and present) one or more addresses (e.g. advertisements) matching the keyword and/or category and/or context from a remote service. The context may be data defined from any of time, day of the week, communication device location, communication device velocity, device profile and category of a matching contact. Device profile may be determined using profile determining rules and contextual data. The method may periodically collect contextual data and define a profile determining rule in response to a pattern in the collected data.

## Description

### Field

The present disclosure relates generally to personal communication devices and more particularly to a method and system for searching and presenting information in an address book.

### Background

Communication devices, particularly wireless communication devices are useful to receive, store and present content (e.g. information in one or more files) to users of such devices. Communication devices may be configured via one or more applications to communicate with other devices, assist a user to complete a particular task, and engage in e-commerce transactions. One type of information that may be maintained is a list of contacts arranged in an address book.

### Summary

Address information is searched in an address book on a communication device in response to various context information. A category is defined from a keyword. A context is determined. The address book is searched using the keywords and/or category and or/context to locate matching contacts. Matching contacts may be presented in a user interface, for example, in accordance with presentation rules responsive to the context. The method may further look-up (and present) one or more addresses (e.g. advertisements) matching the keyword and/or category and/or context from a remote service. The context may be data defined from any of time, day of the week, communication device location, communication device velocity, device profile and category of a matching contact. Device profile may be determined using profile determining rules and contextual data. The method may periodically collect contextual data and define a profile determining rule in response to a pattern in the collected data.

In accordance with one aspect there is provided a computer implemented method for searching information in an address book on a communication device, the method comprising: determining a category from a keyword received for a search of an address book; determining a context of the search; and searching the address book using the keyword and/or category and/or context to locate one or more matching contacts from the address book.

The method may further comprising presenting the matching contacts in a user interface, for example, in accordance with address book presentation rules responsive to the context.

The method may comprise receiving one or more look-up addresses from a remote service providing address information, the one or more look-up addresses matching at least one of the keyword, category and context. The method may further comprise presenting the look-up addresses in a user interface, for example, in accordance with address book presentation rules responsive to the context.

Determining a category may comprise performing a look-up from a remote service providing category information.

Context may comprise data defined from any one or more of time, day of the week, communication device location, communication device velocity, device profile and category of a matching contact. The method may comprise determining the device profile in accordance with contextual data and profile determining rules. In one embodiment, contextual data is collected periodically and a profile determining rule defined in response to a pattern in the collected data. At least some of the profile determining rules may be responsive to one or more of time, day of the week, communication device location, and communication device velocity.

The method may comprise storing contacts in the address book, the contacts comprising one or more categories to facilitate a search, said categories determined in response to a keyword provided to select a category.

The communication device may comprise a wireless mobile communication device.

In accordance with another aspect, there is provided a communication device comprising a processor and a memory coupled thereto and a communication sub-system, coupled to the processor, for searching address information, the memory storing instructions and data for execution by the processor to perform the method aspect. These and other aspects will apparent to a persons of ordinary skill in the art.

### Brief Description of the Drawings

The disclosure will now be described by way of example only with reference to the following drawings in which:

**FIG. 1** is a block diagram illustrating a wireless communication device suitable for communicating, receiving and presenting content (information) and assisting a user thereof in accordance with one embodiment such as to search an address book and present information in a user interface;

**FIG. 2** is a block diagram of a communication system suitable for providing the operating environment of the device of FIG. 1 in accordance with one embodiment;

**FIG. 3** illustrates selected modules of a memory of a wireless device of FIG. 1 in accordance with one embodiment;

**FIGS. 4** **and** **6** are flow charts showing operations to search an address book and present information in accordance with an embodiment;

**FIGS. 5A, 5B, 5C, 5D** are flow charts showing operations to determine and maintain context information (e.g. device profile) to assist with an address search in accordance with an embodiment;

**FIGS. 7A and 7B** are flow charts showing operations to add a new contact to an address book in accordance with an embodiment;

**FIGS. 8 to 13****, 14A and 14B** are representative screen shots of a presentation of information in an address book user interface in accordance with various embodiments.

### Detailed Description

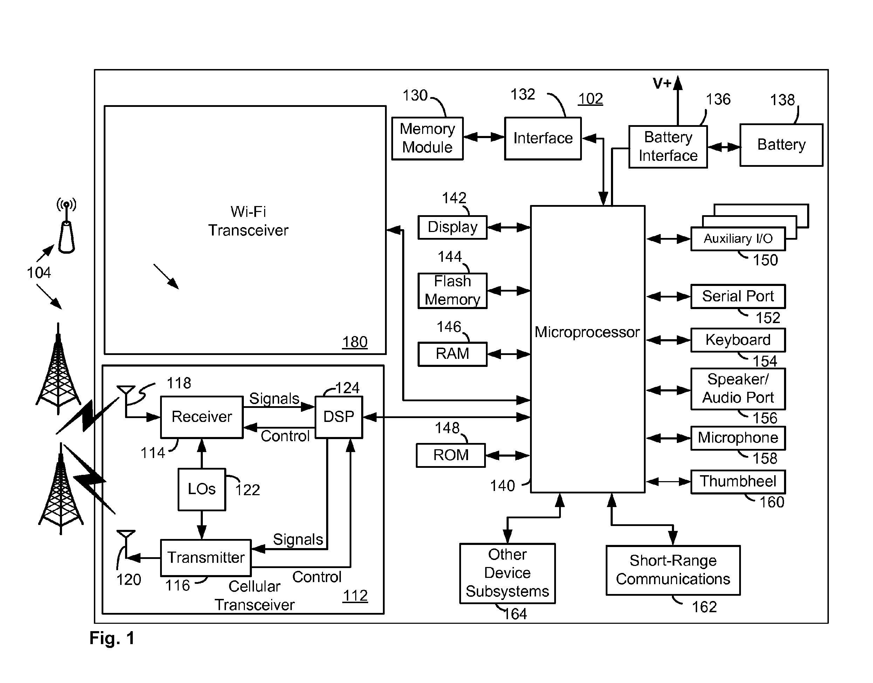

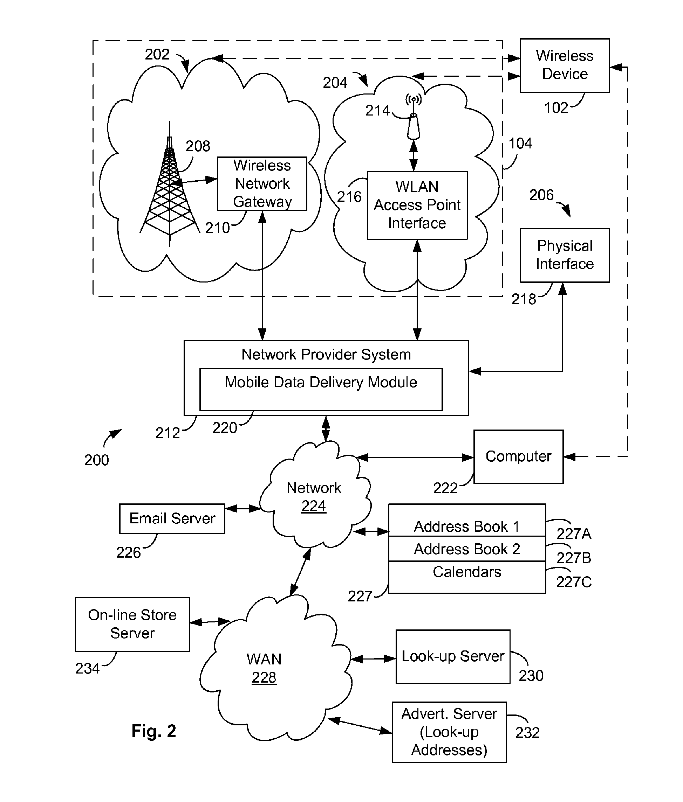

Reference is first made to FIG. 1, which shows a block diagram illustrating a portable wireless device 102 that is suitable for communicating for, receiving and presenting content in accordance with one aspect of the present disclosure. The wireless device 102 communicates through a wireless communication network 104. The wireless network 104 includes antenna, base stations, and supporting radio equipment as for supporting wireless communications between the wireless device 102 and other devices connected to wireless network 104. The wireless network 104 may be coupled to a wireless network gateway and to a wide area network, shown in FIG. 2.

In one embodiment, the wireless device 102 is a two-way communication device having at least data and/or voice communication capabilities, including the capability to communicate with other computer systems. In one embodiment, the wireless device 102 is a handheld device. Depending on the functionality provided by the wireless device 102, it may be referred to as a data messaging device, a two-way pager, a cellular telephone with data messaging capabilities, a wireless Internet appliance, a data communication device (with or without telephony capabilities), a smart phone, personal digital assistant, or a portable media or music player. The wireless device 102 may communicate with any one of a plurality of fixed transceiver stations within its geographic coverage area.

The wireless device 102 may incorporate a one or more communication subsystems 112, 180. Communication subsystem 112 comprises a receiver 114, a transmitter 116, and associated components, such as one or more antenna elements 118 and 120, local oscillators (LOs) 122, and a processing module such as a digital signal processor (DSP) 124. In one embodiment, the antenna elements 118 and 120 may be embedded or internal to the wireless device 102. As will be apparent to those skilled in the field of communications, the particular design of the communication subsystem 112 depends on the wireless network 104 in which the wireless device 102 is intended to operate.

The wireless device 102 may send and receive communication signals over the wireless network 104 after the required network registration or activation procedures have been completed. Signals received by the antenna 118 through the wireless network 104 are input to the receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 124. In a similar manner, signals to be transmitted are processed, including modulation and encoding, for example, by the DSP 124. These DSP-processed signals are input to the transmitter 116 for digital-to-analog (D/A) conversion, frequency up conversion, filtering, amplification, and transmission to the wireless network 104 via the antenna 120. The DSP 124 not only processes communication signals, but also provides for receiver and transmitter control. For example, the gains applied to communication signals in the receiver 114 and the transmitter 116 may be adaptively controlled through automatic gain control algorithms implemented in the DSP 124.

Network access (WAN) may be associated with a subscriber or user of the wireless device 102 via a memory module, such as a memory module 130, which may be a Subscriber Identity Module (SIM) card for use in a GSM network or a USIM card for use in a UMTS. The SIM card is inserted in or connected to an interface 132 of the wireless device 102 in order to operate in conjunction with the wireless network 104. Alternatively, the wireless device 102 may have an integrated identity module for use with systems such as Code Division Multiple Access (CDMA) systems. Device 102 may include a Wi-Fi transceiver 180 that may comprise similar components/chipsets to subsystem 112 adapted for one or more Wi-Fi protocols. Though Wi-Fi is shown, WiMAX is one alternative transceiver. In some embodiments, device 102 may be capable of both Wi-Fi and WiMAX communications in accordance with software-defined radio ("cognizant radio") techniques.

The wireless device 102 also includes a battery interface 136 for receiving one or more rechargeable batteries 138. The battery 138 provides electrical power to at least some of the electrical circuitry in the wireless device 102, and the battery interface 136 provides a mechanical and electrical connection for the battery 138. The battery interface 136 is coupled to a regulator (not shown) which provides power V+ to the circuitry of the wireless device 102.

The wireless device 102 includes a microprocessor 140 which controls the overall operation of the wireless device 102. Communication functions, including at least data and voice communications, are performed through the communication subsystem 112. The microprocessor 140 also interacts with additional device subsystems such as a display 142, a flash memory 144, a random access memory (RAM) 146, a read-only memory (ROM) 148, auxiliary input/output (I/O) subsystems 150, a Universal Serial Bus (USB) port 152, a keyboard or keypad 154, a speaker or audio port 156 for connecting to, for example a set of headphones, a microphone 158, a clickable thumbwheel, trackball, or set of scroll buttons 160, a short-range communications subsystem 162, and any other device subsystems generally designated as 164. Some of the subsystems shown in FIG. 1 perform communication-related functions, whereas other subsystems may provide "resident" or on-device functions. Notably, some subsystems, such as the keypad 154, the display 142, and the clickable thumbwheel 160, for example, may be used for both communication-related functions, such as entering a text message for transmission over the wireless network 104, and executing device-resident functions such as a calculator or task list. Operating system software used by the microprocessor 140 is preferably stored in a persistent store such as the flash memory 144, which may alternatively be the ROM 148 or similar storage element. Those skilled in the art will appreciate that the operating system, specific device applications, or parts thereof, may be temporarily loaded into a volatile store such as the RAM 146.

The microprocessor 140, in addition to its operating system functions, enables execution of software applications on the wireless device 102. A predetermined set of applications that control basic device operations, including data and voice communication applications, will normally be installed on the wireless device 102 during or after manufacture. The wireless device 102 may include a personal information manager (PIM) application having the ability to organize and manage data items relating to a user such as, but not limited to, instant messaging, email, calendar events, voice mails, appointments, and task items. One or more memory stores may be available on the wireless device 102 to facilitate storage of information, such as the flash memory 144, the RAM 146, the ROM 148, the memory module 130, or other types of memory storage devices or FLASH memory cards represented by the other device subsystems 164, such as Secure Digital (SD) cards, mini SD cards, micro SD cards, etc.

The PIM and/or media applications have the ability to send and receive data items via either the wireless network 104 or a link to a computer system. The link to the computer system may be via the serial port 152 or the short-range communications subsystem 162. Additional applications may also be loaded onto the wireless device 102 through the wireless network 104, the auxiliary I/O subsystem 150, the serial port 152, the short-range communications subsystem 162, or any other suitable subsystem 164, and installed by a user in the RAM 146 or a nonvolatile store such as the ROM 148 for execution by the microprocessor 140. Such flexibility in application installation increases the functionality of the wireless device 102 and may provide enhanced on-device functions, communication-related functions, or both. For example, secure communication applications may enable electronic commerce functions and other such financial transactions to be performed using the wireless device 102.

In a data communication mode, a received data signal representing information such as a text message, an email message, a media file to be transferred, or Web page download will be processed by the communication subsystem 112 and input to the microprocessor 140. The microprocessor 140 will further process the signal for output to the display 142 or alternatively to the auxiliary I/O device 150. A user of the wireless device 102 may also compose data items, such as email messages, for example, using the keypad 154 and/or the clickable thumbwheel 160 in conjunction with the display 142 and possibly the auxiliary I/O device 150. The keypad 154 may be either a complete alphanumeric keypad or telephone-type keypad.

For voice communications, the overall operation of the wireless device 102 is similar, except that the received signals would be output to the speaker or audio port 156 and signals for transmission would be generated by a transducer such as the microphone 158. Alternative voice or audio I/O subsystems, such as a voice message recording subsystem, may also be implemented on the wireless device 102. Although voice or audio signal output is typically accomplished primarily through the speaker or audio port 156, the display 142 may also be used to provide an indication of the identity of a calling party, duration of a voice call, or other voice call related information. Stereo headphones may also be used in place of the speaker 156.

The serial port 152 is normally implemented in a personal digital assistant (PDA) type communication device for which synchronization with a user's computer is a desirable, albeit optional, component. The serial port 152 enables a user to set preferences through an external device or software application and extends the capabilities of the wireless device 102 by providing for information, media file, or software downloads to the wireless device 102 other than through the wireless network 104.

The short-range communications subsystem 162 is an additional optional component which provides for communication between the wireless device 102 and different systems or devices, which need not necessarily be similar devices. For example, the subsystem 162 may include an infrared device and associated circuits and components, or a wireless bus protocol compliant communication mechanism such as a Bluetooth^{™} communication module to provide for communication with similarly-enabled systems and devices (Bluetooth^{™} is a registered trademark of Bluetooth SIG, Inc.). In another embodiment, the short-range communications subsystem 162 may be a wireless networking communications subsystem, conforming to IEEE 802.11 standards such as 802.11b, 802.11g, and/or 802.11n.

Reference is next made to FIG. 2, which shows a communication system 200 suitable for use with the wireless device 102 shown in FIG. 1. The communication system 200 generally includes one or more wireless devices 102 (only one of which is shown in FIG. 2) and the wireless network 104. The wireless network 104 may include a wireless Wide Area Network (WAN) 202, a Wireless Local Area Network (WLAN) 204, and/or other interfaces 206 (which may not necessarily be wireless).

Referring to FIG. 2, the wireless WAN 202 may be implemented as a packet-based cellular or mobile network that includes a number of base stations 208 (one of which is shown in FIG. 2) where each of the base stations 208 provides wireless Radio Frequency (RF) coverage to a corresponding area or cell. The wireless WAN 202 is typically operated by a cellular network service provider that sells subscription packages to users of the wireless devices 102. The wireless WAN 202 comprises a number of different types of networks, for example, Mobitex Radio Network, DataTAC^{™}, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution), UMTS (Universal Mobile Telecommunications Systems), Third Generation Partnership Project (3GPP or 3G), or Evolution-Data Optimized (EV-DO).

As shown in FIG. 2, the communications system 200 also includes a wireless network gateway 210 and one or more network provider systems 212. The wireless network gateway 210 provides translation and routing services between the network provider system(s) 212 and the WAN 202, which facilitates communication between the wireless devices 102 and other devices (not shown) connected, directly or indirectly, to the network provider system 212.

The WLAN 204 comprises a network which in some examples conforms to IEEE 802.11 standards such as 802.11b, 802.11g, and/or 802.11n; however, other communications protocols may also be used for the WLAN 204. The WLAN 204 includes one or more wireless RF Access Points (AP) 214 (one of which is shown in FIG. 2) that collectively provide a WLAN coverage area. For the embodiment depicted in FIG. 2, the WLAN 204 is operated by an enterprise (for example, a business or university in a building or campus type environment) and the access points 214 are connected to an access point (AP) interface 216. The AP interface 216 provides translation and routing services between the access points 214 and the network provider system 212 to facilitate communication between two or more of the wireless devices 102 and other devices (e.g., such as desktop computers) connected, directly or indirectly, to the network provider system 212. The AP interface 216 is implemented using a computer, for example, a server running a suitable computer program or software.

According to one embodiment, the other interfaces 206 may be implemented using a physical interface indicated by reference 218. The physical interface 218 includes an Ethernet, Universal Serial Bus (USB), Firewire^{™}, or infrared (IR) connection implemented to exchange information between the network provider system 212 and the wireless device 102.

The network provider system 212 comprises a server or server modules or a number of servers or server modules which are typically located behind a firewall (not shown). The network provider system 212 may include a number of modules including a mobile data delivery module 220. Various modules running on the network provider system 212 may be implemented as a number of services running on a single server or as a number of interconnected servers each running a software program to implement the functionality of the respective module. The network provider system 212 provides access for the wireless devices 102, through either the wireless WAN 202, the WLAN 204, or the other connection 206 to the devices connected, for example, through an enterprise network 224 (e.g., an intranet), to the network provider system 212. In one embodiment, the data delivery module 220 is implemented on a computer, such as the network provider system 212.

The enterprise network 224 comprises a local area network, an intranet, the Internet, a direct connection, or combinations thereof. The enterprise network 224 may comprise an intranet for a corporation or other type of organization. In at least some embodiments, the network provider system 212 is part of the enterprise network 224, and is located behind a corporate firewall and connected to the wireless network gateway 210 through the Internet. A computer 222 (e.g., a desktop or laptop computer) assigned to the user of the wireless device 102 is typically connected to the enterprise network 224. As described earlier, the wireless device 102 may be temporarily and directly connected to the computer 222 using, for example, the serial port 152. This direct connection may make use of a cradle or docking station connected to a serial port of the computer 222, where the mobile device 102 is placed in the cradle, therefore completing the serial connection between the mobile device 102 and the computer 222. Alternatively, the wireless device 102 may communicate with the computer 222 using the communication subsystem 112 and the WAN 202 and/or the short-range communications subsystem 162 and the WLAN 204.

As shown in FIG. 2, an application/content server 227 may be connected to the enterprise network 224 and also to another network, for example, a Wide Area Network (WAN) 228. In some embodiment the application/content server 227 may be connected to the network provider system 220 or to the WAN 228. In some embodiments, an email server 226 and/or the content server 227 form part of the enterprise network 224. In the present embodiment, server 227 comprises a PIM server that provides PIM-related data for devices registered with an enterprise such as wireless device 102. The data may comprise one or more address books (e.g. 227A, 227B), and calendars, for example. One of the address books e.g. 227A may comprise an enterprise global address book available to all members of an enterprise and available to devices such as device 102 to look up addresses. Another address book (e.g. 227B) may be a network address book or a personal address book whether in the network 224 or 220 or 228, that may be synchronized to a locally stored address book on a particular device 102 or a enterprise computer (e.g. 222) of the user. Server 227 may store a plurality of similar personal address books (not shown) for a plurality of respective enterprise and device users. Server 227 may also maintain personal calendars 227C for respective users. Personal calendars 227C and address books 227B are often synchronized to corresponding calendars and address books maintained on mobile devices (e.g. 102) so that there is data continuity on a user's mobile device and enterprise device (e.g. 222). Commonly available enterprise software for such PIM data is offered by Microsoft, IBM Lotus, Novell and others. PIM data may be integrated with messaging (email) data and presented in a unified graphical user interface.

The WAN 228 may further connect to other networks. The WAN 228 may comprise or be configured with the Internet, a direct connection, a LAN, a wireless communication link, or any combination thereof. Content providers may provide content (information) via content servers, such as Web servers, connected to the WAN 228, an example of which is shown in FIG. 2 as context lookup server 230 for determining context information such as information categories from keywords, advertisement server 232 for advertisements (e.g. business names and addresses as address information) and an on-line store server 234 which may be configured for conducting e-commerce transactions. Persons of ordinary skill in the art will appreciate that additional infrastructure may be employed in addition to servers 230, 232 and 234 to provide their services and that FIG. 2 is simplified.

In some embodiments, advertisement server 232 may be configured to provide advertisements comprising address data such as contacts for specific businesses which are sponsored addresses. Sponsored addresses may including a reference (e.g. a link) to coupons or timely special offers, etc. The ranking of a sponsored address (whether by server 232, device 102 or both) could be responsive to the sponsorship such that it ranks higher in a display of contacts than un-sponsored addresses (e.g. those obtained from a publicly available directory of addresses). Businesses may contract with an operator or agent of server 232 to promote the businesses address, for example, paying for an elevated ranking when a particular keyword(s) and/or category(s) etc. are searched.

In some embodiments, store server 234 may provide data (e.g. a coupon/link) to be associated with (e.g. added to) advertisement/address data to be returned from advertisement server 232 in response to a search.

According to one embodiment, the mobile data delivery module 220 provides connectivity between the wireless WAN 202 and the WLAN 204 and the other connection 206 and devices and/or networks connected directly or indirectly to the network provider system 212. In one embodiment, the connectivity provided may be Hypertext Transfer Protocol (HTTP) based connectivity, pull / push based connectivity or broadcast based connectivity providing an Internet based service connection to devices connected to the wireless WAN 202, the WLAN 204, or the other connection 206 and devices and/or networks connected directly or indirectly to the network provider system 212. The network 224, the application/content server 227, the WAN 228, and the servers 230, 232, 234 are individually and/or collectively in various combinations a content source for the network provider system 212.

It will be appreciated that the system shown in FIG. 2 comprises but one possible communication network or configuration of a multitude of possible configurations for use with the wireless devices 102.

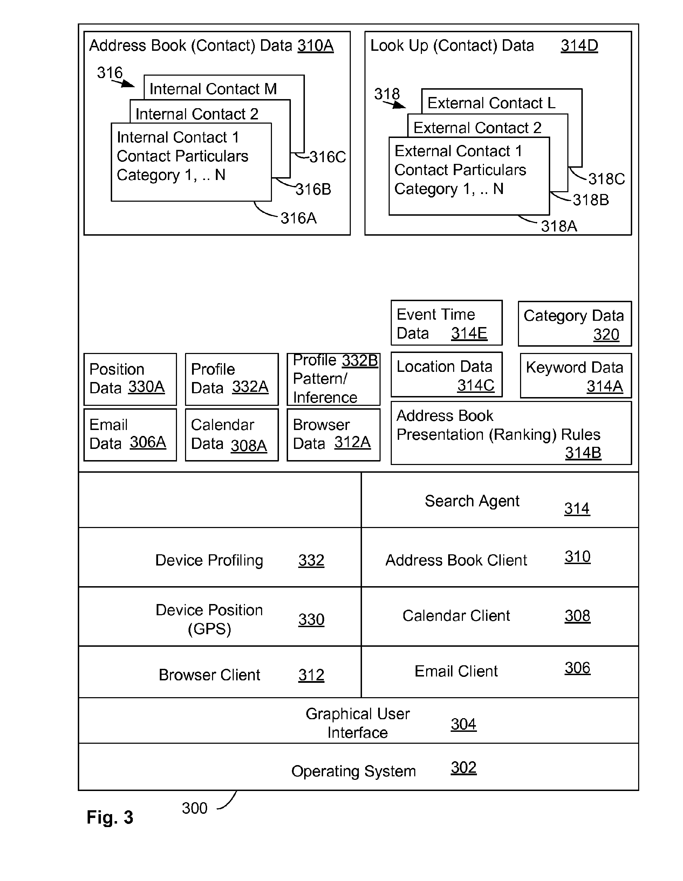

Reference is next made to FIG. 3, which shows a block diagram illustrating a memory 300 of the wireless device 102. The memory 300 stores various software components (e.g. instructions and data) for controlling the wireless device 102 (e.g. for configuring the execution of a processor such as microprocessor 140). Memory 300 may comprise, for example, flash memory 144, RAM 146, ROM 148, memory module 130 and/or other device subsystems 164. In accordance with one embodiment, the wireless device 102 is intended to be a multi-tasking wireless communications device configured for sending and receiving data items and for making and receiving voice calls that also includes various applications enabling users to listen to music, watch video files, play games, view picture files, browse the Internet wirelessly, etc. To provide a user-friendly environment to control the operation of the wireless device 102, an operating system (OS) 302 resident on the wireless device 102 provides a basic set of operations for supporting various applications typically operable through a shared graphical user interface (GUI) 304. For example, the operating system 302 provides basic input/output system features to obtain input from the auxiliary I/O 150, the keypad 154, the clickable track ball/thumbwheel 160, and other input devices, and to facilitate output to the user via the display 142. The GUI 304 is typically a component of the operating system 302. Other modules may provide additional GUI features.

One or more software modules for managing communications or providing a personal digital assistant (PDA) or other functions may also be included. In the present embodiment, memory 300 also comprises an email client 306, a calendar client 308, an address book client 310 and a browser client 312 for performing, respectively, messaging, appointment management, contact management and Internet browsing. In some embodiments the address book client can be a Open Mobile Alliance (OMA) CAB client. Memory 300 stores (i.e. locally stores) respective data 306A, 308A, 310A and 312A for theses modules. Some of the data (e.g. email messages, appointment data, address book contact data) may be synchronized with externally (i.e. remotely) store data (e.g. 227B, 227C). The various clients, particularly, the address book or the calendar, may provided interfaces such that another of the client modules may use the interface to invoke features or functions thereof. For example, the address book may provide an interface so that the email client may obtain a contact's email address. Other applications (not shown) may include a phone application, one or more IM applications, an SMS application, etc.

In accordance with a present embodiment, address book data 310A comprises a plurality (1...M) of contacts (collectively 316 and individually 316A, 316B, 316C). Each contact comprises contact particulars (e.g. name, one or more addresses, one or more phone numbers, one or more email addresses, etc.). An individual contact may further comprise 1 to N categories for assisting with a search of contacts. For example, a contact (e.g. 316A) for a pizza restaurant may include a contact category data item representing Food - Italian. It may include one or more other categories (e.g. Food - Patio, Food - Take Out, etc.) or one or more contact views (e.g. contact "game identity", contact "social networking identity"). Categories may distinguish business from personal contacts,(e.g. friends, family), etc.

In accordance with the present embodiment, memory 300 further stores a device position (e.g. GPS) module 330 for determining device position data 330A such as location, velocity, direction, etc. and may include a device profiling module 332 for determining device profile data 332A (e.g. "At work", "Commuting home", "At home", ...), for example, using profile pattern and/or inference data 332B. Device profiling module 332 may receive/utilize various contextual data such as position data 330A, time and date data (not shown), etc. to define profile data 332A, profile pattern and/or inference data 332B or both. Though described as a separate module, device profiling module 332 (that is, its features or functions) may be configured within other modules such as the address book module 310.

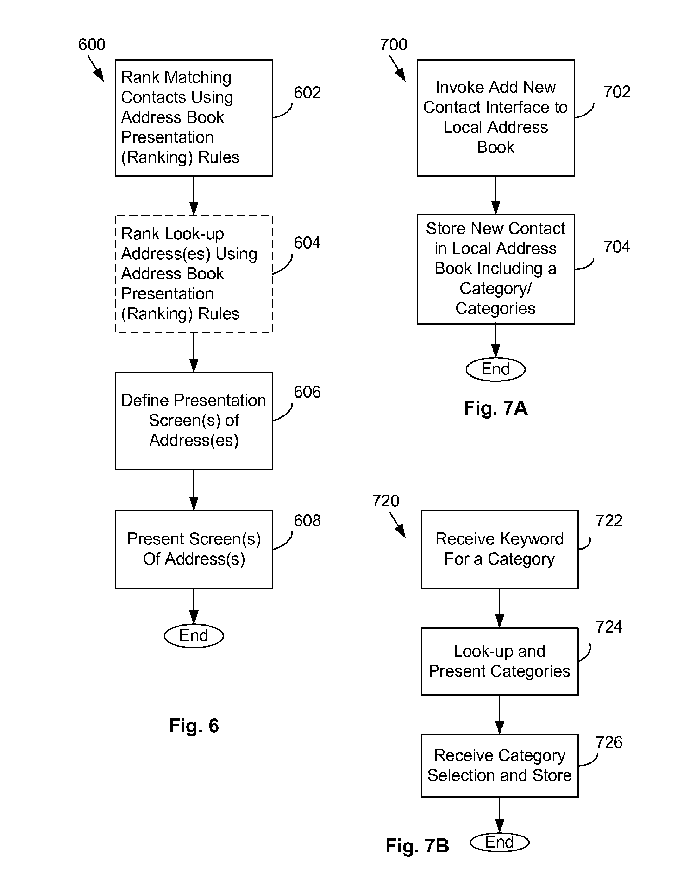

In accordance with the present embodiment, memory 300 further stores a search agent 314 to assist with the searching in the address book module 310. Search agent can be part of the address book module 310 or may be a separate component. Search agent 314 may also assist with the defining and storing of contacts 316 in address book contact data 310A as described further herein below with reference to Figs. 7A and 7B. Search agent 314 may utilise a keyword 314A (e.g. data input by a user) to filter/look-up contacts 316 in local address book 310A. Search agent 314 may utilise the keyword 314A to filter/look-up contacts 318 in remotely stored address book such as provided by server 232.

To assist with the filter/look-up activity, search agent 314 may determine one or more categories 320 from or associated with the keyword 314A. Search agent 314 may forward keyword 314A to look-up server 230 and request one or more matching categories in response and store same as data 320. In other instances or embodiments, search agent 314 may determine a category locally. The address data 310A as well as remotely stored data may be filtered using the category or a combination of the category and the keywords to determine contact matches. Server 230 may use mapping or other inference, taxonomic, semantic, match to determine an information category from a keyword (e.g. a class or subject with which the keyword is associated). Though shown separately, servers 230 and 232 may be combined. The server 230 may be configured to operate in one or more languages to provide appropriate categories and a request from an agent 314 may comprise a language indication. Language choice may be a user option facilitated by agent 314.

Address book client 310, search agent 314 or a combination thereof may comprise and/or utilize address book presentation (e.g. ranking) rules 314B to order and determine the presentation of contacts 316 and 318 determined in response to a search. The rules 314B may compute a rank (score) for each contact and order the results accordingly. Ranking may be determined in response to contextual data such as current (i.e. present or real-time) profile data, position data, time data, day of the week data, the contact data of a matching contact (e.g. its category), etc. Ranking may be determined in accordance with defined inferences and/or patterns, heuristics and user preferences. Presentation may distinguish local contacts 316 from look-up contacts 318. As further described, search agent 314 may further receive (e.g. via user input) and utilize location data 314C and/or event time data 314E (e.g. either or both for defining context data) to assist with searching remotely stored addresses and/or presenting address information.

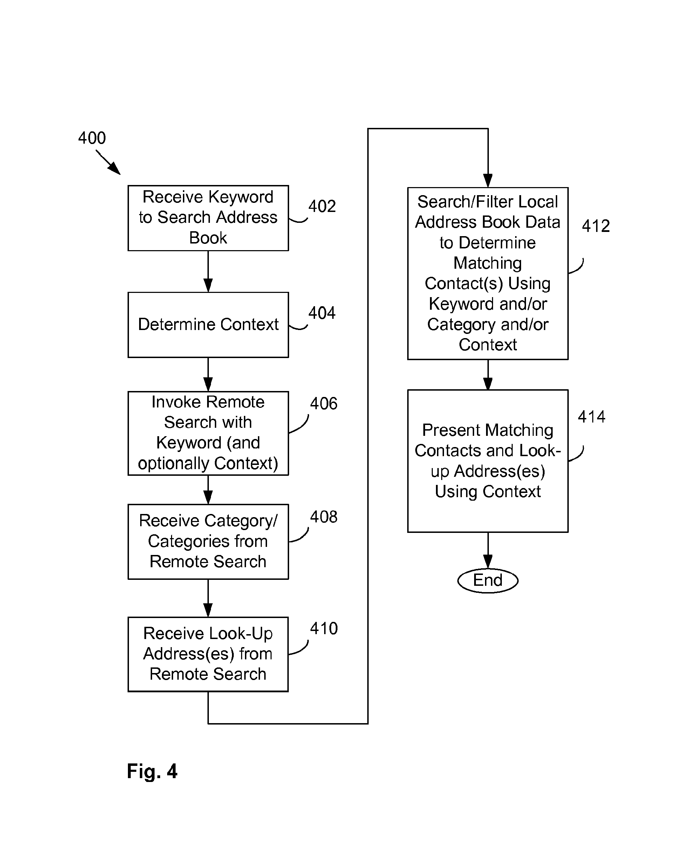

With reference to FIG. 4 there are operations for searching address book data and presenting results in accordance with an embodiment. A user may input a keyword 314A (e.g. "pizz" or "samosa") into a search field and invoke a search (block 402). Search agent 314 may initiate a remote search for one or more matching categories and one or more matching addresses stored in a remote store (block 406) such as servers 230 and 232. Context data may be determined (block 404) and optionally provided with the search request (406). Context data may include one or more of position data, velocity, direction, current time, as well as search location data 314C, event time data 314E, etc.

Search agent 314 may receive (e.g. via one or more replies) one or more associated categories 320 (block 408) and look-up data 314D (block 410) comprising one or more look-up contacts 318. A matching category 320 may be "Food-Italian" for keyword "pizz" of "Food-Indian" for "samosa", for example. "Rose" may map to "Store - Florist". In some instances, more than one category may match. It is also understood that some searches may not return any matching categories or any look-up contacts (not shown).

Search agent 314 may search (e.g. filter) local address book data 310A at step 412, using the keyword and received category 320 to determine one more matching contacts (block 412). Search agent 314 (or address book client 310) presents matching contacts and look-up addresses in accordance with context data (block 414) if used or according to a preset ordering (e.g. user contacts first, remote search response second). With further reference to operations 600 of FIG. 6, agent 314 uses rules 314B, context data such as profile data, categories, location etc. to rank and order the matching contacts of address book 310A (block 602). In one embodiment, only the locally stored matching contacts are ordered, the received addresses 318 being pre-ordered remotely. Thus optionally, look-up addresses are ranked (block 604). In some embodiments, one or more screens are defined using the ranked results (block 606).

Ranking and/or ordering may involve assigning a numerical rank or score to a particular matching contact. In some cases, the ordering can be based on the proximity of the contact to one of the user location, keyword location, search parameters (e.g. Coffee shop nearby x,y). Those matching contacts with a higher score may be presented earlier (e.g. ordered higher in a presentation list of matching contacts). In one embodiment, a minimum score may be required to present a matching contact. A user option may be presented to invite the presentation of more matching contacts. It should be understood that local contact and look-up results could be interleaved in the presentation order or could be split in different screen areas as per above descriptions. While not shown in Figs. 3 and 4 it should be understood that the search agent 314 may allow entering keyword, categories and additional search parameters such as nearby, nearby contact X, nearby location Y. Hence when a contact is displayed in the address book, (possibly as a result of the search) a "search nearby" could be invoked.

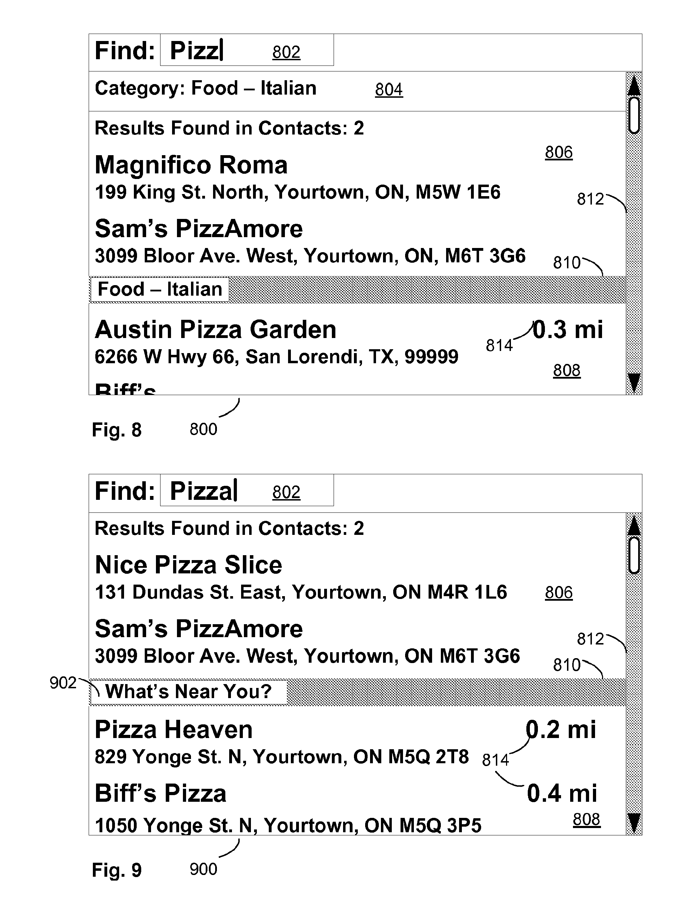

The ordered results are presented to the user (displayed in one or more screens via display 142) (block 608). In some cases, the ordering is an alphabetic ordering and no address book presentation (Ranking) rules module 314B may be required. FIG. 8, described further below, is a representative screen presentation 800. The user may interact with the contact data and look-up address data, for example, to invoke a communication with a contact, get direction to the contact, or add one or more received contacts 318 to local data 310A (not shown in FIGS.). In some embodiment, the look-up data may be automatically stored in the user address book, based on some conditions. Conditions can be: user interacted with the look-up data, look-up data provider required storing of the results to provide them.

While not shown in the FIGS., in some embodiments, the look-up data 314B may be temporarily stored on the device 102 so that another search for the similar category could recall the search results from the temporary storage. In some cases, it can be possible to store either the search criteria or the search results. This option can be accessible via the address book user interface, a specific function in the address book menu or the like.

In some embodiments (e.g. where a search category is determined from local operations (e.g. a stored prior search or prior look up etc.) a person of ordinary skill in the art will appreciate that certain operations of FIG. 4 may be performed in a different order, substantially contemporaneously or not at all. For example, operations of block 412 may be performed before or contemporaneously with remote search aspects of operations 406 and 410 where a category is already available. Operations 410 need not be performed. In other embodiments, operations 408 and 40 are performed together, for example, where the category is provided with the address data in a combined response.

It will also be appreciated that for some keywords provided, no category may be returned and thus searching at step 412 may be performed with the keyword or keywords alone. No category may be returned when no match is found or possibly where the keyword is an identical match to the category.

In another scenario, with reference to FIG. 4 again, a user may search enter a keyword "Mike" (block 402). Search agent 314 may look-up and receive look-up data 314D and or a category 320 (blocks 404-410). In some instances, no category or no look-up data 314 may be received for a particular keyword (not shown). Filtering the data 310A, the keyword may match one or more individuals having contacts in the local address book 310A (block 412).

The ranking of the matching contacts (using rules 314B and context data, contact data, or presentation presets) orders the results (block 414). On a weekday or with a profile "At Work", co-workers (e.g. indicated in category data for matching contacts) may be presented earlier in the results. On a weekend or evening or with a profile "At Home", friends or family (indicated in category data for matching contacts) may be presented earlier in the results.

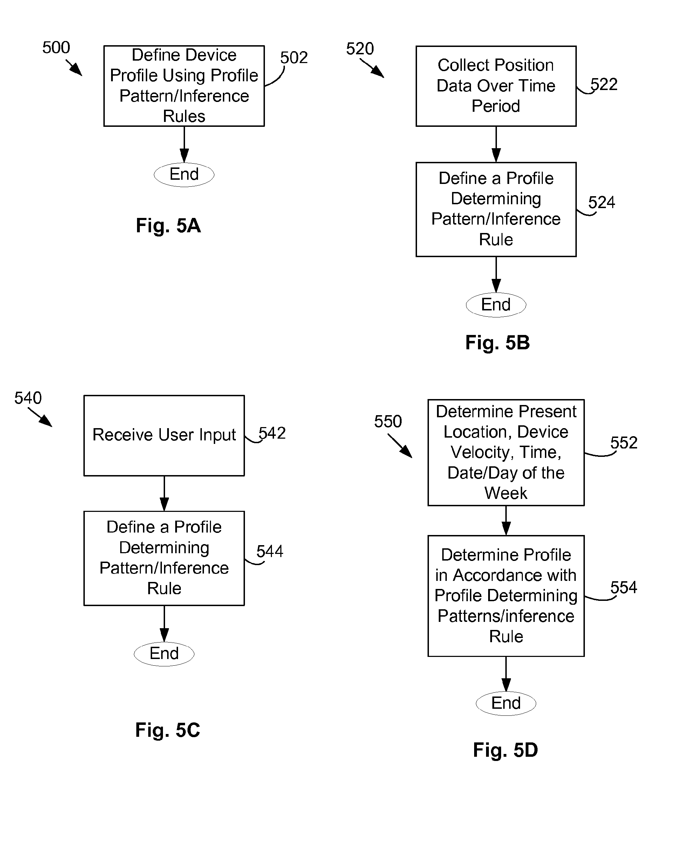

With reference to FIGS. 5A-5D, device profiling module 332 may determine (update/maintain current) profile data 332A and pattern inference data 332B automatically. It should be understood that profile data 332A and pattern inference data 332B may be available in various device components or memory location from where the module 332, 314 or 310 could retrieved them. For example, using position data 330A (location, velocity, etc.) time and other real-time data, stored patterns or inference data (e.g. home location, work location, home to work route) module 330 may determine various profiles such as "At Home", "At Work", "Commuting To Work", "Commuting From Work", "Shopping" (block 502 of operations 500). Profiles, patterns or inference data may be determined automatically or via user input. For example, in a learning mode (operations 520), module 332 may sample location data and/or velocity, over time (block 522). The sampled data may be applied to predefined patterns and inference data to define profile match data to indicate a home location, a work location, a travel route to and from home (block 524). In one embodiment, a user may be prompted to enter profile assistive data (operations 540. Device profiling module 330 may receive (block 542) a home or work location (e.g. "enter your home address" or "Press Enter to save your present (GPS) location as your work location"). The received data may be stored or manipulated to define a profile determining pattern/inference rule etc. (block 544).

To determine a current profile via operations 550, periodically, location, time, velocity and other data (day of week etc) may be determined (block 552). Such may be applied to the profile determining rules (e.g. compared with profile match data, patterns, etc.) to compute a profile match. Conflicts may be resolved where more than one profile is indicated (e.g. location may dominate when "Weekend" and "At work" are candidate profiles).

FIGS. 7A and 7B show operations 700 and 720 for adding a new contact to a local book 310A according to an embodiment. When new contacts are to be added to address book data 310A, upon invoking a new contact user interface (block 702) of address book client 310 contact data is received and data stored as a contact (e.g. 316C). To assist with associating one or more categories in the contact, search agent 314 may be utilized to look-up one or more categories (blocks 722, 724 and 726). For example, a user may be prompted to enter a keyword associated with the contact to look-up and select a category. Search agent may communicate with server 230 to normalize the user's entered keyword (e.g. to find a best match and force the user entered keyword to a predetermined category), to present category choices to the user, etc. Alternatively, as the search results may already contains a keywords or category (blocks 722 and 724) for the look-up data to be saved in the address book, the keyword/category is automatically associated with the contact at block 704.

FIG. 8 is a representative presentation (screen shot) 800 of information in an address book user interface. Presentation 800 shows example search results determined and ordered as described herein above, namely, address book contacts 316 and look-up addresses 318 matching a keyword and/or a mapped category. The keyword may be input by a user, for example, via keyboard 154, into a keyword entry form portion 802. Presentation 800 comprises a category display portion 804, matching contacts display portion 806 and look-up address display portion 808 separated by separator 810. Scroll tools interface 812 permits user navigation (e.g. via a pointing device, key, trackball, touch screen finger swipe etc.) to additional addresses. Though not shown, presentation 800 may be associated to menus and other GUI components to assist a user to interact with the matching contacts and addresses. The components may facilitate a user to select one or more of same, for example to invoke a communication function of the device 102 to communicate with the contact, to add one or more matching look-up addresses 318 to local address book 310A, to forward an address to another device (e.g. contact), select and edit contact data, etc.

In the present embodiment, look-up address display portion 808 also displays proximity information 814, for example, to indicate a proximity of the address to the current location of device 102. In one embodiment, context information provided to look-up server/advertisement server 230/232 may include the current location of the device 102 with which to determine the proximity information 814. In one embodiment, proximity may be determined by device 102 in another manner, for example, via look-up operations conducted with another server (not shown), providing the device's current location and the look-up address or locally, for example using features of module 330 (look-up address information received by device 102 may include GPS co-ordinates with which to determine proximity locally).

FIGS. 9 to 11 illustrate various embodiments of screen shots showing a user interface for search agent 314 and address book 310 in which location and proximity may be used for defining search criteria and/or one or more address book presentation rules 314B. Search agent 314 may provide a user interface element for a user to input (or select) location related information for assisting with the search (e.g. look-up addresses in "Paris, FR") as well as presentation of search results ("show addresses nearby" ranked by closest proximity"). FIG. 9 illustrates view 900 wherein look-up addresses 318 are displayed (808) in proximity order and a separator 810 displays a presentation descriptor (information) 902 comprising "What's Near You?" indicating the proximity ranking relative to the current location. Ranking search results by proximity may be a user selected ranking preference for example (not shown).

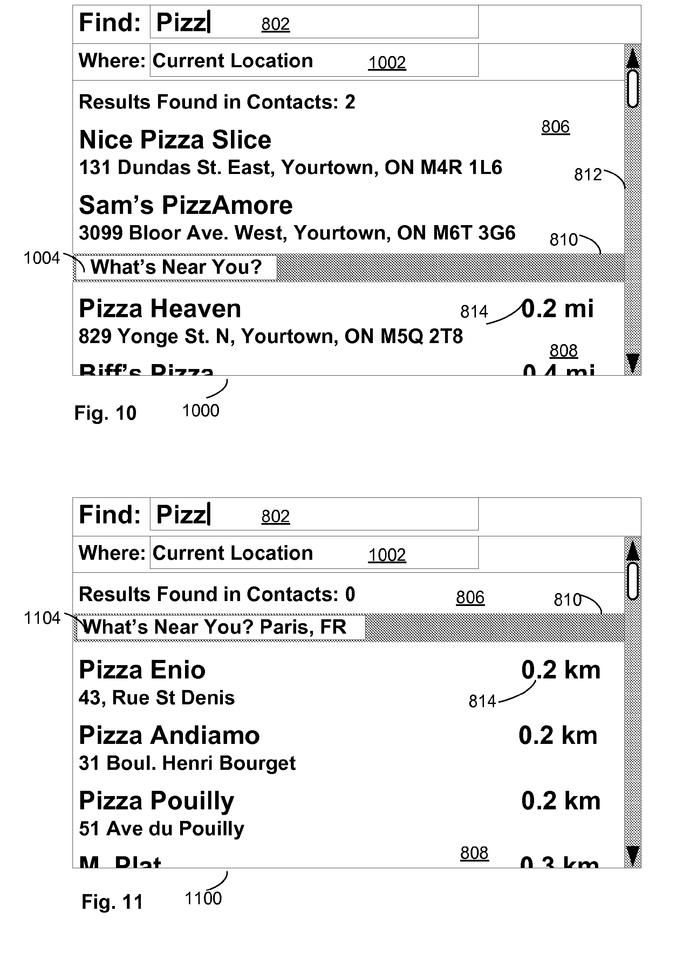

FIGS. 10 and 11 include a user interface element 1002 with which a user may define a location-related search criterion and/or ranking criterion. In the illustrated embodiment 1000 of FIG. 10 and 1100 of FIG. 11, element 1002 is in the form of a input field for selecting or inputting a location term (data 314C). The data may comprise at least a portion of an address, such as a city, state/province, country, postal code, etc. in some embodiments or other instructions (e.g. "current location").

View 1000 shows look-up addresses 318 in portion 808 in a proximity presentation order. Search agent 314 may be configured to determine that the device 102 is relatively proximate to one or more addresses in the address book 310A and present look up addresses (automatically) with proximity ranking and descriptor 1004. View 1100 shows look-up addresses 318 in portion 808 in a proximity presentation order where the user does not have contacts in address book 310A at the current location. Search agent 314 may be configured to determine that the device 102 is not relatively proximate to one or more addresses in the address book 310A and present look up addresses (automatically) with proximity ranking and descriptor 1104 indicating the current location.

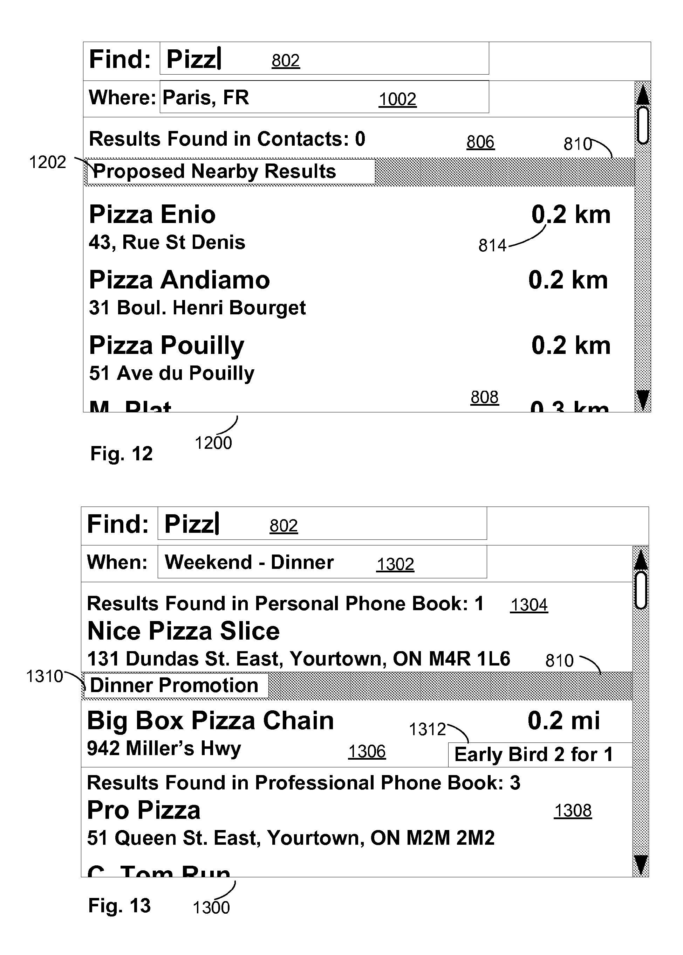

FIG. 12 shows view 1200 in accordance with an embodiment where a user has input a specific city (e.g. "Paris, FR") as location data 314C for searching for matching addresses. The search agent receives location data 314C and provides such as a portion of the look-up query to server 230/232. Search agent 314 utilizes data 314C as well to filter contacts of book 310A. No matching contacts are located in address book 310A. Look-up addresses 318 received in response to the search are shown in portion 808 with proximity information 814 and a descriptor 1202.

FIG. 13. shows a view 1300 of a user interface comprising an element 1302 for receiving another search and/or presentation criterion (namely event time data 314E) as context data. In the present embodiment, search agent 314 is configured to filter and present contacts from a personal address book and a professional address book associated to device 102 as well as retrieve look up addresses (e.g. as described above). It is understood that the personal addresses and professional addresses may be stored in a same book (e.g. 310A) and distinguished by a category or profile data element (not shown).

Search agent 314 receives event time 314E (e.g. "Weekend - Dinner"). Event time data 314E may be utilized to match or define profile data 332A (e.g. "Weekend" or "At home", etc.) which profile data 332A may be utilized in presenting matching contacts (e.g. via rules 314 B and predefined screen layout definitions (not specifically shown) of the address book user interface, etc). Search agent 314 may provides data 314E and/or profile data 332A as a portion of the look-up query (e.g. as context data) to server 230/232. Search agent 314 utilizes data 314E (directly or indirectly) as well to filter contacts of book 310A. For example, the term "Dinner" in data 314E may be utilized to filter (i.e. select only) or rank higher selected addresses that are open in the evening. Remote search servers 230/232 may be similarly configured.

In view 1300, for example, matching contacts that are personal in nature may be presented (portion 1304) before matching contacts that are professional in nature (portion 1308). In the current embodiment, a sponsored look-up address is presented in portion 1306 before professional contacts in portion 1308. Sponsored look-up address information is presented in association with a separator 810 comprising descriptor 1310 indicating a promotion. Sponsored look-up address information in FIG. 13 further comprises advertising content 1312. Though only text-type content is shown in content 1312, the content 1312 may comprise text, image(s), URL or other type links for invoking other content or actions etc.

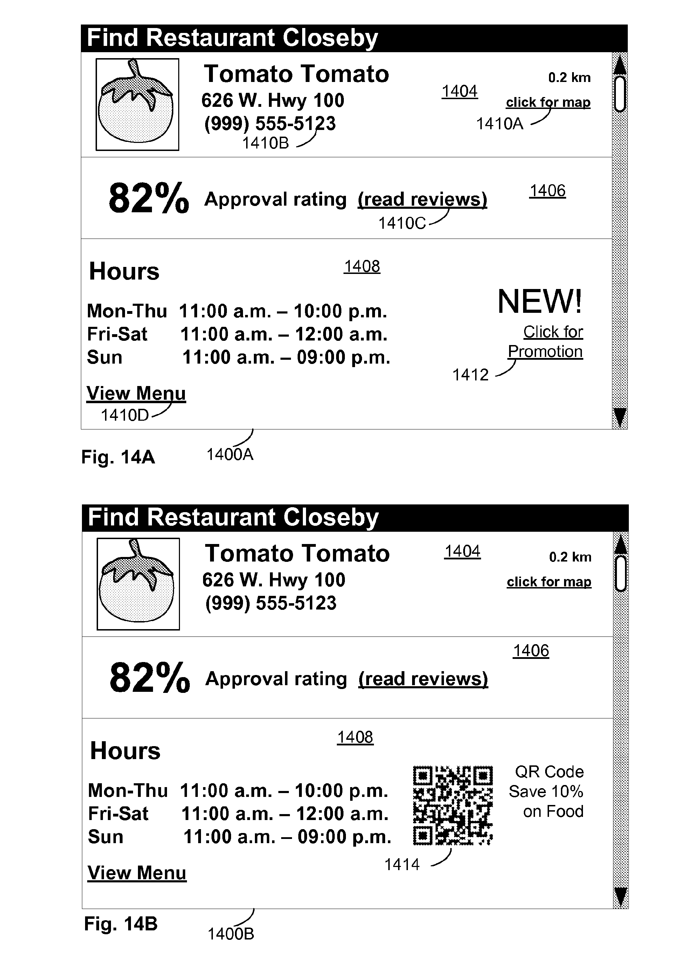

FIGS. 14A and 14B illustrate a further views 1400A and 1400B showing further advertising content in portions of the screen display for presenting address information in a user interface of an address book, particularly look-up address information. Views 1400A and 1400B comprises an address information portion 1402, a review portion 1404 and a further information portion 1406. The information content may comprise text, images, etc. Any of the portions may comprise interactive user interface elements (e.g. clickable elements or key invoked elements) to invoke actions such as retrieving further information or invoking other communication functions of device 102, etc. (e.g. to display a map 1410A, to call a telephone number 1410B, to make a reservation (not shown) (e.g. via server 234), to retrieve a review 1410C, to retrieve a menu 1410D, etc.) In view 1400A there is shown interactive element 1412 to refresh the contact, for example, for retrieving a daily coupon 1414 (FIG. 14B).

Thus, the wireless device 102 includes computer executable programmed instructions for directing the wireless device 102 to implement various applications. The programmed instructions may be embodied in the one or more software modules resident in the memory 300 of the wireless device 102. Alternatively, the programmed instructions may be tangibly embodied or stored on a computer readable medium (such as a DVD, CD, floppy disk or other storage media) which may be used for transporting the programmed instructions to the memory 300 of the wireless device 102. Alternatively, the programmed instructions may be embedded or carried in a computer-readable, signal-bearing medium that is uploaded to the wireless network 104 by a vendor or supplier of the programmed instructions, and this signal-bearing medium may be downloaded through one or more of the interfaces 112, 150, 152, 162 to the wireless device 102 from, for example, the wireless network 104 by end users.

Though shown and described only with reference to searching a single local address book 310A and a single remote server stored (230/232) address book, search agent 314 and address book client 310 may be configured to search one or more other address books. For example, device 102 may be configured to search address books 227A, 227B maintained by an enterprise or other entity with which device 102 (and hence its user) is associated, such as a network address book hosted by a wireless carrier, a public network address book such as yellow page. Searching additional address books may be performed automatically, that is, generally contemporaneously when searching book 310A and server 232 or upon user invoked request, for example, if suitable matches are not returned by an initial search.

In a further embodiment, search agent 314 may be configured to invoke contextually and ordered searches and presentations of addresses from only one of address book 310A or server 232. For example, search agent may present a user option to select which data (in book 310A, server 233 and/or 227, etc.). is to be searched. When searching only data in book 31A for example, agent 314 may communicate with look-up server 230 to determine a category from a keyword.

Search agent 314 may be configured to user other data from other components (e.g. sensors or sub-devices and associated software modules therefor) coupled to device 102 for providing context data such as light sensors, magnetometers, accelerometers, biometric sensors, etc.

The embodiments of the present disclosure described above are intended to be examples only. Those of skill in the art may effect alterations, modifications and variations to the particular embodiments without departing from the intended scope of the present disclosure. In particular, selected features from one or more of the above-described embodiments may be combined to create alternative embodiments not explicitly described, features suitable for such combinations being readily apparent to persons skilled in the art. The subject matter described herein in the recited claims intends to cover and embrace all suitable changes in technology.

## Claims

1. A computer implemented method for searching information in an address book (310A) on a communication device, the method comprising:
determining (402, 406, 408) a category (320) from a keyword (314) received for a search of an address book;
determining (404) a context (330A, 332A) of the search; and
searching (412) the address book using the keyword and/or category and/or context to locate one or more matching contacts (316A, 316B, 316C) from the address book.

2. The method of claim 1 further comprising presenting (414) the matching contacts in a user interface (800, 900, 1000, 1300).

3. The method of claim 2 wherein presenting the matching contacts comprises presenting (600) the matching contacts in accordance with address book presentation rules (314B) responsive to the context.

4. The method of any one of claims 1 to 3 comprising receiving (410) one or more look-up addresses (318) from a remote service (232, 234) providing address information, said one or more look-up addresses matching at least one of the keyword, category and context.

5. The method of claim 4 comprising presenting the look-up addresses in a user interface (800, 900, 1000, 1100, 1200, 1300, 1400A, 1400B).

6. The method of any one of claims 1 to 5 wherein determining a category comprises performing (406, 408) a look-up from a remote service (232, 234) providing category information.

7. The method of any one of claims 1 to 6 wherein the context comprises data defined from any one or more of time, day of the week, communication device location, communication device velocity, device profile and category of a matching contact.

8. The method of claim 7 comprising determining (500, 540, 550) the device profile (332A) in accordance with contextual data and profile determining rules (332B).

9. The method of claim 8 comprising (520) periodically collecting contextual data and defining a profile determining rule in response to a pattern in said collected data.

10. The method of claim 8 wherein at least some of the profile determining rules are responsive (554) to one or more of time, day of the week, communication device location, and communication device velocity.

11. The method of any one of claims 1 to 10 further comprising storing (700) contacts (316) in the address book, said contacts comprising one or more categories to facilitate a search, said categories determined (720) in response to a keyword provided to select a category.

12. The method of any one of claims 1 to 11 wherein the communication device is a wireless mobile communication device (102).

13. A communication device comprising a processor (140) and a memory (130, 144, 146, 148, 300) coupled thereto and a communication sub-system (112, 180), coupled to the processor, for communicating with a content server (232, 234), said memory storing instructions and data for execution by the processor to configure the communication device to perform a method in accordance with any one of claims 1 to 12.

14. A computer program product comprising a memory storing instructions and data to configure the execution of a processor of a communication device to search information in an address book on a communication device such that said communication device is configured to perform a method in accordance with any one of claims 1 to 12.

## Amended claims

### Amended claims in accordance with Rule 137(2) EPC.

**1.** A computer implemented method for searching information in an address book (310A) provided via a communication device, the method comprising:
receiving a keyword (314) for a search of an address book;
matching the keyword to at least one category (320);
determining (404) a context (330A, 332A) of the search, the context of the search comprising data defined from a device profile (332A); and
searching (412) the address book using the keyword and/or category and/or context to locate one or more matching contacts (316A, 316B, 316C) from the address book,
wherein the device profile is determined (500, 540, 550) in accordance with contextual data and profile determining rules (332B).

**2.** The method of claim 1 further comprising presenting (414) the matching contacts in a user interface (800, 900, 1000, 1300).

**3.** The method of claim 2 wherein presenting the matching contacts comprises presenting (600) the matching contacts in accordance with address book presentation rules (314B) responsive to the context.

**4.** The method of any one of claims 1 to 3 comprising receiving (410) one or more look-up contacts (318) from a remote service (232, 234) providing address information, said one or more look-up contacts matching at least one of the keyword, category and context.

**5.** The method of claim 4 comprising presenting the look-up contacts in a user interface (800, 00, 1000, 1100, 1200, 1300, 1400A, 1400B).

**6.** The method of any one of claims 1 to 5 wherein determining a category comprises performing (406, 408) a look-up from a remote service (232, 234) providing category information.

**7.** The method of any one of claims 1 to 6 wherein the context further comprises data defined from any one or more of time, day of the week, communication device location, communication device velocity and category of a matching contact.

**8.** The method of claim 1 comprising (520) periodically collecting contextual data and defining a profile determining rule in response to a pattern in said collected data.

**9.** The method of claim 1 wherein at least some of the profile determining rules are responsive (554) to one or more of time, day of the week and communication device velocity.

**10.** The method of any one of claims 1 to 9 further comprising storing (700) contacts (316) in the address book, said contacts comprising one or more categories to facilitate a search, said categories determined (720) in response to a keyword provided to select a category.

**11.** The method of any one of claims 1 to 10 wherein the communication device is a wireless mobile communication device (102).

**12.** A communication device comprising a processor (140) and a memory (130, 144, 146, 148, 300) coupled thereto and a communication sub-system (112, 180), coupled to the processor, for communicating with a content server (232, 234), said memory storing instructions and data for execution by the processor to configure the communication device to perform a method in accordance with any one of claims 1 to 11.

**13.** A computer program product comprising a memory storing instructions and data to configure the execution of a processor of a communication device to search information in an address book on a communication device such that said communication device is configured to perform a method in accordance with any one of claims 1 to 12.
